Europäisches Patentamt

European Patent Office

Office européen des brevets

(11) Publication number: 0 306 189
A2

# EUROPEAN PATENT APPLICATION

(21) Application number: 88307749.7

(22) Date of filing: 22.08.88

(51) Int. Cl.⁴: G01L 9/00

(30) Priority: 28.08.87 GB 8720295

(43) Date of publication of application:
08.03.89 Bulletin 89/10

(84) Designated Contracting States:
BE DE FR GB IT NL SE

(71) Applicant: VALEPORT MARINE SCIENTIFIC
LIMITED
Unit 7 Townstal Industrial Estate
Dartmouth Devon, TQ6 9LX(GB)

(72) Inventor: Crocker, Timothy Richard
Ridge Gate
Steep Petersfield Hants-(GB)
Inventor: Cuffe, Robert William
6, Compton Close
Charleton Kingsbridge Devon(GB)

(74) Representative: Harrison, Ivor Stanley et al
Withers & Rogers 4 Dyer's Building Holborn
London EC1N 2JT(GB)

(54) Pressure measuring instrument.

(57) A pressure measuring instrument suitable for immersion in water to measure wave and tidal pressures comprises a cylindrical body (1) within which is a compliance chamber (12) communicating with the external pressure through a restrictor (14), the system being chosen to have a time constant preferably in the range 60-300 seconds. Transducers (18, 16) respectively measure the differential pressure between the complaince chamber (12) and the exterior, and the pressure within the compliance chamber, giving measures of wave pressure and tidal pressure.

FIG 1

## PRESSURE MEASURING INSTRUMENT

The present invention relates to a pressure measuring instrument suitable for immersion in water to measure pressure fluctuations therein.

An instrument of the aforesaid type, useable for measuring wave and/or tidal pressures, needs to be of simple and robust construction since it has to stand adverse conditions and is not conveniently accessible for servicing and adjustment. It is an object of the present invention to provide such an instrument.

Accordingly, the present invention provides a pressure measuring instrument suitable for immersion in water to measure pressure fluctuations therein, comprising a body exposed to external pressure at one end and provided with a transverse wall dividing the interior into a compliance chamber and an outer chamber exposed to the external pressure, a hydraulic restrictor through which the compliance chamber communicates with the outer chamber, and a differential pressure transducer mounted and connected so as to measure the pressure difference between the compliance chamber and the outer chamber. This instrument can be used to measure wave pressures.

In a preferred embodiment, however, the instrument has a further pressure transducer exposed at one end to the pressure in the compliance chamber and at the other end to atmospheric pressure, for measuring the pressure within the compliance chamber, whereby the instrument can be used to measure tidal pressures as well as wave pressures.

One embodiment of the invention will now be described, by way of example, with reference to the accompanying drawings, in which:

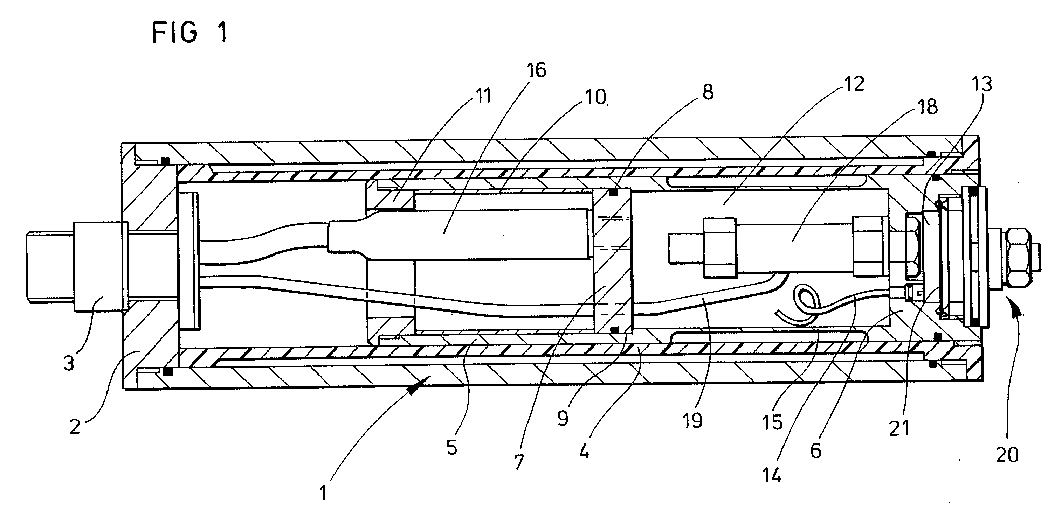

Figure 1 is a partially sectioned side view of a pressure measuring instrument according to the present invention, and

Figure 2 is a sectioned side view of a detail of the instrument of Figure 1, on an enlarged scale.

The instrument consists of an outer cylindrical brass body 1 having an end cap 2 at one end. This end cap is provided with a cable outlet 3 through which passes a cable carrying leads for transducers within the instrument and a vent pipe to ensure that the space within the end cap 2 is at atmospheric pressure. The body, end cap, and cable outlet are all of robust construction so as to act as a pressure housing.

A sleeve 4 of plastics material is inserted into the body 1 from its end opposite the end cap 2 and provides a measure of thermal insulation for the components within it. Within the plastics sleeve is inserted an inner body 5 of brass with a transverse wall 6 at its outer end. A partition 7 provided with O-ring seals 8 is secured firmly in position by being clamped against a rebate 9 in the inner body 5 by means of a sleeve 10 and a clamping ring 11. The space between the partition 7 and the transverse wall 6 forms a compliance chamber 12.

Beyond the transverse wall 6, the inner body is sealed by a flexible diaphragm 21 so as to define an outer chamber 13. The compliance chamber 12 communicates with this outer chamber through a restrictor comprising a length of microbore tubing 14 which passes through the transverse wall 6. The outer wall of the inner body 5 around the region of the compliance chamber 12 is machined so as to reduce it to a very small thickness, as shown at 15.

A vented gauge transducer 16 is mounted in the partition 7 so that it is exposed at one end to the pressure in the compliance chamber 12 and at the other end to atmospheric pressure by way of the vent pipe contained within the outlet 3, as mentioned above. It thus measures the static pressure within the compliance chamber 12.

A second transducer 18 is mounted in the transverse wall 6 and measures the difference in pressure between the inside of the compliance chamber 12 and the outer chamber 13. The whole of the space within the compliance chamber 12, the outer chamber 13 and the microbore tubing 14 is filled with an inert liquid such as oil, and the stiffness of the flexible diaphragm 21 is sufficiently low to ensure that for all practical purposes the pressure of the oil or other inert liquid in the outer chamber 13 is the same as that of the sea water in which the device is immersed in operation and which acts on the outer surface of the diaphragm 21.

Electrical leads 19 pass from the transducer 18 to the cable outlet 3, being sealed in a liquid-tight manner through the partition 7.

A deployment device 20 fits into a recess in the outer end of the inner body 5 outside the flexible diaphragm 21, and protects the diaphragm 21 by allowing only gradual access of water pressure when the instrument is first deployed.

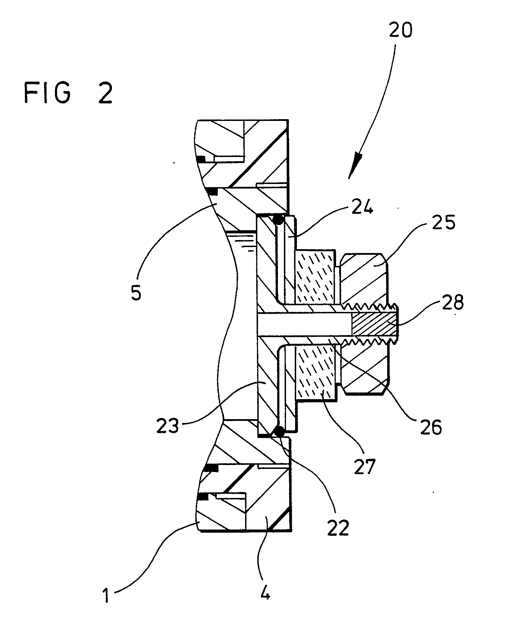

As shown in Figure 2, the deployment device 20 includes an O-ring seal 22 which is clamped between pressure plates 23, 24 by means of a clamping nut 25 so as to be forced radially outwardly into gripping engagement with the internal wall of the inner body 5. The pressure plate 23 is constituted by an annular inner end flange of a duct 26 whose outer end is externally threaded for engagement of the nut 25. The pressure plate 24 is constituted by an annular washer which surrounds the duct 26 and is pressed against the seal 22 by a washer 27 on which the nut 25 bears. The washer 27 is made of salt or some other soluble material. The outer end of the duct 26 is plugged by a sintered metal filter 28 which allows the water pressure to be applied to the diaphragm 21 only very gradually over a period comparable to the time constant of the instrument. After the device has been immersed for a considerable period, for example, half an hour, the salt washer 27 dissolves, relieving the clamping pressure on the O-ring 22 and allowing the deployment device 20 to drop off.

The compliance of the compliance chamber 12 is due in part to the compression of the oil within it, and in part to distension of the thin outer wall 15. This compliance, in combination with the resistance due to the viscosity of the fluid in the microbore tubing 14, forms a filter whose time constant may be varied over a wide range of the order of 1-1000 seconds by a suitable choice of parameters, in particular the length and bore of the microbore tubing, the viscosity of the oil, and the volume and wall thickness of the chamber. For measurement of wave pressure and tidal pressures, a time constant in the range 60-300 seconds is suitable. With such a value, the reading obtained from the differential transducer 18 represents wave pressure and that from the transducer 16 tidal pressure.

The deployment device 20 prevents the differential transducer 18 from being exposed suddenly to the full hydrostatic pressure. It may therefore be of much smaller range and higher sensitivity than the transducer 16.

The instrument of the invention enables the achievement of relatively long time constants without the introduction of significant temperature sensitivity. It is the latter which normally determines the upper limit of the time constant.

# Claims

1. A pressure measuring instrument suitable for immersion in water to measure pressure fluctuations therein, comprising a body (1) exposed to external pressure at one end and provided with a transverse wall (6) dividing the interior into a compliance chamber (12) and an outer chamber (13) exposed to the external pressure, a hydraulic restrictor (14) through which the compliance chamber (12) communicates with the outer chamber (13), and a differential pressure transducer (18) mounted and connected so as to measure the pressure difference between the compliance chamber (12) and the outer chamber (13).

2. A pressure measuring instrument according to Claim 1, characterised in that it has a further pressure transducer (16) exposed at one end to the pressure within the compliance chamber (12) and at the other end to atmospheric pressure, for measuring the pressure within the compliance chamber (12).

3. A pressure measuring instrument according to Claim 1 or Claim 2, characterised in that the cylindrical body (1) comprises an outer shell and an inner body (5), the wall thickness of the inner body (5) being reduced where (15) it forms the wall of the compliance chamber (12).

4. A pressure measuring instrument according to any of the preceding claims, characterised in that the restrictor connecting the chambers (12, 13) comprises a length of microbore tubing (14).

5. A pressure measuring instrument according to any of the preceding claims, characterised in that the dimensions of the compliance chamber (12) and the restrictor (14) are so chosen as to give a time constant lying in the range 1-1000 seconds.

6. A pressure measuring instrument according to any of the preceding claims, characterised in that the compliance chamber (12), the restrictor (14) and the outer chamber (13) are filled with an inert liquid, and in that the outer chamber (13) is sealed from the exterior by a flexible diaphragm (21).

7. A pressure measuring instrument according to Claim 6, characterised in that it includes a closure comprising a deployment device (20) which allows only gradual access of external pressure to the flexible diaphragm (21), the deployment device (20) being temporarily retained in position by means (22, 23, 24, 25, 27) including a soluble element (27).

# FIG 1

EP 0 306 189 A2

FIG 2